# EUROPÄISCHE PATENTSCHRIFT

(11) **EP 1 276 033 B1**
(45) Veröffentlichungstag und Bekanntmachung des Hinweises auf die Patenterteilung: **14.03.2012**
(21) Anmeldenummer: 01116594.1
(22) Anmeldetag: 10.07.2001
(51) Int. Cl.: G06F 21/00

(54) **Speichereinrichtung mit Datenschutz in einem Prozessor**
Memory device with data protection in a processor
Dispositif de mémoire ayant la protection de données dans un processeur

(43) Veröffentlichungstag der Anmeldung: 15.01.2003
(73) Patentinhaber: Trident Microsystems (Far East) Ltd., Grand Cayman (KY)
(72) Erfinder: Möller, Peter, Dipl.-Ing., 79000 Freiburg (DE); Mijovic, Zoran, Dipl.-Ing., 79111 Freiburg (DE); Jünke, Manfred, Dipl.-Ing., 79194 Gundelfingen (DE); Ritter, Joachim, Dipl.-Ing., 79540 Lörrach (DE); Zimmermann, Steffen, Dr.-Ing., 79112 Freiburg (DE)
(74) Vertreter: Epping - Hermann - Fischer

(56) Entgegenhaltungen:
- WO-A-00/75759
- FR-A- 2 797 966
- US-A- 5 826 007

## Beschreibung

Die Erfindung betrifft eine Speichereinrichtung mit Datenschutz in einem Prozessor. Die Erfindung unterstützt die Schutzfunktion bekannter Verschlüsselungsverfahren mit öffentlichen oder geheimen Schlüssel- oder Passwörter, indem sie den Zugang sowohl zum Verschlüsselungsprogramm als auch zum Passwort in der jeweiligen Speichereinrichtung verhindert. Diese empfindlichen Daten befinden sich auf einem im Prozessor mitintegrierten Schreib-Lesespeicher, beispielsweise einem elektrisch schreib- und lesbaren "Flash"-Speicher. Dies hat den Vorteil, dass der Inhalt des Schreib-Lesespeichers nicht direkt ausgelesen werden kann, sondern nur indirekt über Datenschnittstellen. Als extern zugängliche Datenschnittstellen sind beispielsweise die standardisierte Schnittstellen JTAG (= Joint Test Action Group), UART (= Universal Asynchron Receiver Transmitter) oder USB (= Universal Serial Bus Interface) bekannt, die einen seriellen Zugang ermöglichen. Teilweise wie bei USB ist eine Unterstützung der Schnittstellenfunktion durch spezielle Programme im Prozessor erforderlich, teilweise werden die Schnittstellen rein extern gesteuert und sind völlig unabhängig vom Prozessor. Parallele und damit sehr rasche Zugänge sind gegebenenfalls über andere Datenschnittstellen möglich, die ebenfalls vom Prozessor abhängig oder unabhängig, standardisiert oder nichtstandardisiert sein können. Für derartige parallele Schnittstellen wird in der Regel die Funktion einer Vielzahl von Anschlüssen umgeschaltet, so dass beispielsweise Daten und Adressen mit je 32 Bit parallel eingegeben oder parallel ausgegeben werden können.

Als Stand der Technik wird die in diesem Zusammenhang die US 5,442,704 genannt, die eine Vorrichtung zur User-Authentifizierung bei Speicherzugriffen zum Gegenstand hat.

Wenn sich der Benutzer oder Dritte unerlaubt Kenntnis über ein Verschlüsselungsverfahren verschaffen wollen, dann dient das in der Regel dazu, letztendlich an den Inhalt verschlüsselter Daten heranzukommen. Es kann sich dabei um gespeicherte oder übertragene Daten handeln. Als Beispiel wird unerlaubte Übertragung und Vervielfältigung von gebührenpflichtigen Musikstücken mittels des MP3-Kompressionsverfahrens erwähnt. Mit einer Verschlüsselung der Daten lässt sich dies verhindern, allerdings muss dabei das individuelle oder globale Verschlüsselungsprogramm geheim bleiben. Bei großem Interesse an der Entschlüsselung ist davon auszugehen, dass Umgehensprogramme rasch über das Internet oder andere Wege verbreitet werden und die Verschlüsselung unwirksam machen.

Es ist Aufgabe der Erfindung, einen Schutz für gespeicherte Daten eines Prozessors anzugeben, die dort in Verbindung mit einem Verschlüsselungs- oder Entschlüsselungsprogramm gespeichert sind. Insbesondere soll dabei das Verschlüsselungs- oder Entschlüsselungsprogramm gegen unbefugtes Ausgelesen, Verändern oder Löschen geschützt werden. Für autorisierte Benutzer soll jedoch eine Programmaktualisierung jederzeit möglich sein. Die Höhe des Schutzes soll dabei insbesondere vom Anwender und nicht vom Hersteller des Prozessors vorgebbar sein. Im folgenden Text wird zur sprachlichen Vereinfachung Verschlüsselung und Entschlüsselung einheitlich meist als "Verschlüsselung" zusammengefasst.

Unter Anwender wird im folgenden derjenige verstanden, der den Prozessor als Baustein vom Halbleiterhersteller kauft und in eine Anwendungsschaltung einbaut, um eine Vorrichtung oder ein Gerät herzustellen. Die Vorrichtung oder das Gerät wird schließlich von einem Benutzer direkt oder als Teil einer anderen Vorrichtung oder eines anderen Geräts gekauft und in Betrieb genommen.

Die Lösung dieser Aufgabe erfolgt durch die im Anspruch 1 beanspruchten Merkmale. Vorteilhafte Weiterbildungen und Ausgestaltungen finden sich in den abhängigen Ansprüchen.

Der Grundgedanke der Erfindung besteht darin, daß die zu schützende Speichereinrichtung in einem Prozessor mitintegriert wird und dabei einen ersten und zweiten Speicherteil mit unterschiedlichen Zugangsmöglichkeiten enthält. Die Mitintegration der Speichereinrichtung ermöglicht eine Kombination von hardware- und softwaremäßigen Schutzmaßnahmen, die bei einer separaten Speichereinrichtung nicht möglich sind. Der erste Speicherteil nimmt ein Initialisierungsprogramm auf, das auch als Boot-Programm bei der Entschlüsselung dient, und der zweite Speicherteil ein Anwendungsprogramm, beispielsweise ein Programm zur Entschlüsselung und/oder Dekodierung empfangener Daten. Derartige Daten können beispielsweise Audiodaten sein, die nach dem MP3 Standard kodiert sind, gegen einen unerlaubten Empfang mit einem geheimen oder öffentlichen Passwort zusätzlich verschlüsselt sind. Dieses Entschlüsselungsprogramm kann identisch mit dem ziemlich sicheren Entschlüsselungsprogramm im Boot-Bereich sein oder ist Teil des Anwendungsprogrammes im zweiten Speicherteil.

Der erste Speicherteil ist über eine oder mehrere externe Datenschnittstellen programmier- und änderbar, nicht jedoch über den Prozessor oder eine von ihm gesteuerte Datenschnittstelle. Hierdurch kann verhindert werden, daß der Prozessor über irgend ein Programm dazu gebracht werden kann, den Inhalt des Initialisierungsprogramms, das zumindest einen Teil des Verschlüsselungs-, Entschlüsselung- oder Identifikationsprogramms enthält, auszulesen, zu verändern oder zu zerstören. Die im ersten Speicherteil vorhandene Grundfunktion reicht dann immer dazu aus, das gestörte Anwendungsprogramm im zweiten Speicherteil neu zu laden. Der zweite Speicherteil ist sowohl über die externen Datenschnittstellen als auch über den Prozessor und die von ihm gesteuerten Datenschnittstellen programmier- und änderbar.

Der nicht sperrbare Zugang des Prozessors zum ersten und zweiten Speicherteil ist sowohl beim normalen Betriebsablauf als auch dann erforderlich, wenn der Anwender Programmaktualisierungen durch autorisierten Benutzer vorsieht. Derartige Programmaktualisierungen sind beispielsweise in vorgebbaren Intervallen zur Änderung des individuellen oder gruppenbezogenen Verschlüsselungsprogramms oder Passworts erforderlich, um die negativen Folgen eines zufälligen oder widerrechtlichen Bekanntwerdens der Verschlüsselung zu begrenzen. Eine Sperrung, die auf Programmaktualisierungen verzichtet, ist nach der Erfindung jedoch ebenfalls möglich, indem alle externen Datenschnittstellen, also auch die vom Prozessor gesteuerten, vom Anwender durch Setzen einer Sperrinformation gesperrt werden. Wie bereits erwähnt, hat auch in diesem Fall der Prozessor für den normalen Betriebsablauf stets Zugang zu den beiden Speicherteilen.

Die Erfindung ist in der Anpassung an das jeweilige Schutzbedürfnis des Anwenders sehr flexibel und ermöglicht sowohl konsumbezogene als auch professionelle Anwendungen. Eine denkbare Konsumanwendung betrifft beispielsweise eine verschlüsselte Übertragung von Video- oder Audiodaten. Durch die Erfindung kann allein der autorisierte Lizenznehmer die Daten mittels des Prozessors zur Weiterverarbeitung im Prozessor und eigenen Wiedergabe entschlüsseln, er kann jedoch für Dritte keine Kopie der entschlüsselten Daten erstellen, weil diese an keiner extern zugänglichen Schnittstelle zur Verfügung stehen. Ähnlich ist es, wenn in einem Kraftfahrzeug der Motor über ein elektronisches Motormanagement gesteuert wird, dessen geheimes Programm gegen Kopieren oder Verändern geschützt werden soll.

Die Prüfung der Autorisierung oder Identität erfolgt über das geschützte Verschlüsselungsprogramm, das mit dem im ersten oder zweiten Speicherteil abgelegten öffentlichen oder nichtöffentlichen Schlüsselwort und dem verschlüsselt empfangenen Programm auf bekannte Weise zusammenwirkt. Nur wenn alle Teile zusammenpassen, ist eine Entschlüsselung und damit eine sinnvolle Verwendung der empfangenen Daten oder eine Aktualisierung des gespeicherten Programmes möglich.

Der zweite und gegebenenfalls auch erste Speicherteil ist in verschiedene Speicherblöcke aufgeteilt, damit eine blockweise Änderung oder Löschung bei den Programmaktualisierungen möglich ist, um Konflikte zwischen dem neuen und alten Programm zu vermeiden.

Ein erster Speicherblock im ersten oder zweiten Speicherteil enthält ein Schutzregister mit programmierbaren Freigabe- oder Sperrinformationen für jede Datenschnittstelle, um das Lesenund/oder Schreiben des ersten und zweiten Speicherteils über diese Datenschnittstelle zu sperren oder freizugeben. Solange die Sperrinformation noch nicht aktiviert ist, ist der erste und zweite Speicherbereich über alle externe Datenschnittstellen, also auch die vom Prozessor gesteuerten, zugänglich. Dies ermöglicht beispielsweise eine Anpassung, Änderung oder Fehlerbeseitigung des Initialisierungs- oder Anwendungsprogramms beim Hersteller oder Anwender. Werden nach Abschluß dieser Änderungen die Sperrinformationen für die extern zugänglichen Datenschnittstellen vom Anwender gesetzt, können diese in der Regel durch niemand mehr aufgehoben werden ohne das vorhandene Programm zu zerstören. Der erste Speicherblock 4 mit den darin enthaltenen Sperrinformationen ist somit sicher gegen jede Änderung gesichert. Anwender, die sich über die vorhandene Software und das gespeicherten Passwort als autorisiert zu erkennen geben, können gegebenenfalls den Inhalt des Schutzregisters ändern, also die Sperrung aufheben. Diese Möglichkeit räumt dem Anwender im Bedarfsfall eine Fehlersuche in dem eigentlich gesperren Prozessor ein.

Die Abfrage des Schutzregisters erfolgt zweckmäßigerweise gleich beim Einschalten der Spannungsversorgung durch im Prozessor fest verdrahtete Abfragen, und zwar bevor das Initialisierungsprogramm andere Abfragen oder Programmierungen zuläßt. Die Festverdrahtung dieser für den Schutz so wichtigen Abfragen hat den Vorteil, daß sie durch kein Programm absichtlich oder zufällig änderbar sind. Selbstverständlich ist dabei auch sichergestellt, daß die Abfrage des Schutzregisters auch kurzzeitig beim Einschalten des Netzes oder bei dessen Unterbrechung nicht umgangen werden kann.

Ein zweiter und ein dritter Speicherblock im ersten oder zweiten Speicherteil dienen der doppelten Speicherung des öffentlichen oder privaten Schlüsselwortes. Das Schlüsselwort, das auch als Passwort bezeichnet wird, ist und mit dem Verschlüsselungsprogramm im ersten und/oder zweiten Speicherteil verkoppelt. Ob der Anwender einen Schutz mit einem öffentlich zugänglichen oder mit einem öffentlich nicht zugänglichen, also einem privaten oder geheimen Schlüsselwort vorzieht, ist für die Erfindung unwesentlich und hängt lediglich vom Schutzbedürfnis ab. Die Vorund Nachteile beider Systeme werden durch die Erfindung nicht geändert, der Zugang zu dem geschützten Dateninhalt wird jedoch in beiden Fällen verhindert oder zumindest deutlich erschwert.

Ein vierter, relativ großer Speicherblock im zweiten Speicherteil dient der Speicherung eines Anwendungsprogramms. Dieses Programm wird in der Regel bei einer Programmaktualisierung komplett ausgetauscht. Der Inhalt des Anwendungsprogramms ermöglicht dem Prozessor in Verbindung mit dem Passwort die Entschlüsselung und Dekodierung der empfangenen Daten. Selbstverständlich kann der Schutz gegenüber einem unerlaubten Zugriff nicht nur auf der Entschlüsselungsseite verwendet werden sondern auch auf der Verschlüsselungsseite.

Die Erfindung und vorteilhafte Weiterbildungen werden nun anhand der Figuren der Zeichnung näher erläutert:
Fig. 1 zeigt schematisch die Aufteilung einer im Prozessor mitintegrierte Speichereinheit,
Fig. 2 zeigt schematisch ein Schutzregister mit Speicherplätzen für die Schnittstellen,
Fig. 3 zeigt schematisch im Flußdiagramm einen Initialisierungsablauf,
Fig. 4 zeigt schematisch im Flußdiagramm eine Programmaktualisierung und
Fig. 5 zeigt schematisch einen Prozessor als ein Ausführungsbeispiel der Erfindung.

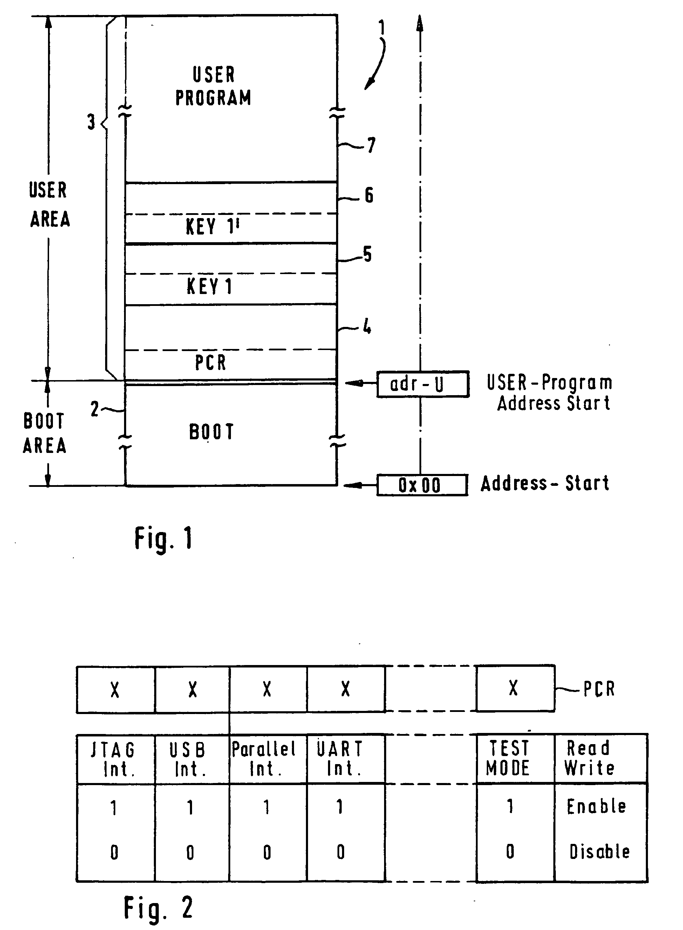

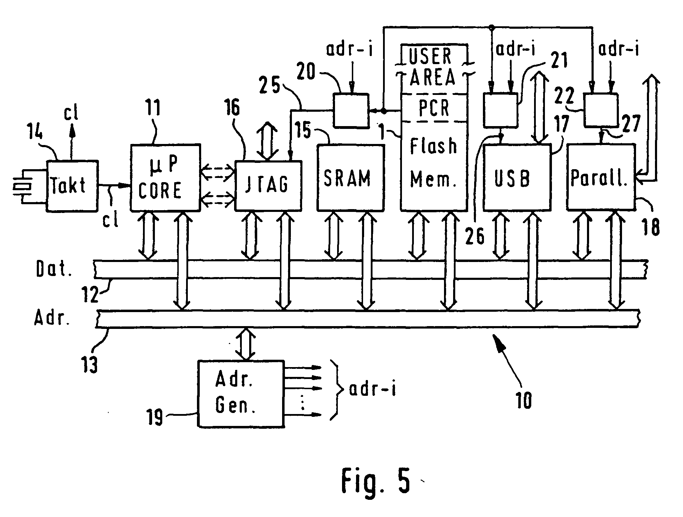

Fig. 1 zeigt schematisch die Aufteilung einer im Prozessor 10 (vergl. Fig. 5) mitintegrierten Speichereinrichtung 1. Ein erster Speicherteil 2, der mit der Startadresse 0x00 beginnt, enthält ein Initialisierungsprogramm, daß auch als Boot-Programm bezeichnet wird. Dieser erste Speicherteil 2 hat für den Anwender und Hersteller nur begrenzte Zugangsmöglichkeiten für die Programmierung, nämlich nur über diejenigen Datenschnittstellen, die von der Funktion des Prozessors unabhängig sind. Während des Herstellungsprozesses ist eventuell über später nicht mehr zugängliche Chipkontakte ein erleichterter Zugang zum ersten Speicherbereich möglich, um das Initialisierungsprogramm zu laden.

Das Initialisierungsprogramm wird beim Einschalten des Prozessors aktiviert. Es enthält auch Programme, die Authentizität oder Identität des Anwenders oder Benutzers prüfen und auch das Lesen und Schreiben der vom Prozessor gesteuerten Datenschnittstellen unterstützen. Das Initialisierungsprogramm enthält auch mindestens diejenigen Teile des Entschlüsselungsprogramms, die erforderlich sind, um bei einem leeren oder gestörten zweiten Speicherteil dessen Neuprogrammierung mit Unterstützung des Prozessors durchführen zu können, beispielsweise durch Zuführung des verschlüsselten neuen Programms über eine vom Prozessor gesteuerte Datenschnittstelle.

An den ersten Speicherteil 2 schließt sich der zweite Speicherteil 3 (=User Area) mit dem Anwendungsprogramm an, dessen Adressen blockweise aufgeteilt sind und mit der Anwender-Startadresse adr-U beginnen. Der erste Speicherblock 4 enthält ein Schutzregister PCR (=Protection Control Register) mit den Freigabe- oder Sperrinformationen für die einzelnen Datenschnittstellen. Zusätzlicher Platz für weitere Daten ist im ersten Speicherblock 4 vorhanden.

An den ersten Speicherblock 4 schließen sich der zweite und dritte Speicherblock 5 bzw. 6 an, die im wesentlichen das dem Benutzer oder der Benutzergruppe zugeordnete Passwort "Key 1" bzw. "Key 1*" enthalten. Beide Passworte sind zu einander identisch und müssen in getrennt löschbaren Speicherbereichen vorhanden sein, damit bei einer Neuprogrammierung zumindest immer ein gültiges Passwort vorhanden ist. Ohne dieses Passwort ist eine Entschlüsselung der empfangenen Daten nicht möglich. Damit bei einer Neuprogrammierung das vorhandene Passwort durch ein neues Passwort ersetzt werden kann, wird das vorhandene Passwort zu verschiedenen Programmabschnitten im zweiten und dritten Speicherblock 5 bzw. 6 gegen das neue Passwort ausgetauscht. Der zweite und dritte Speicherblock 5, 6 sind groß genug, damit sie gegebenenfalls weitere Passworte für andere Verschlüsselungsprogramme aufnehmen können.

Das eigentliche Anwendungsprogramm befindet sich in einem vierten Speicherblock 7. Dieser Speicherblock ist groß genug, damit er aktuelle und künftige Anwenderprogramme aufnehmen kann. Die unterschiedliche Zugangsregelung oder letztendlich die gewünschte Sperrung des ersten und zweiten Speicherteils 2 bzw. 3 wird mittels der Blockadressen hardwaremäßig gesteuert. So wird beispielsweise das Programmiersignal des Prozessors so mit dem Bereichssignal für den ersten Speicherteil 2 logisch verknüpft, so daß das Global- oder Blockspeichersignal für die Speichereinrichtung 1 gar nicht gebildet wird. Wird der erste Speicherteil 2 jedoch in Verbindung mit einer vom Prozessor unabhängigen Datenschnittstelle angesprochen, dann wird das Globaloder Blockspeichersignal nicht unterdrückt, es sei denn, das zugehörige Sperrsignal im Register PCR ist gesetzt. Auf ähnliche Weise erfolgt durch Verknüpfung der Blockadressen oder Adressenbereichssignale mit Signalen für das Lesen oder Schreiben der Speichereinrichtung 1 und der zugehörigen Datenschnittstelle die Steuerung der Blöcke 4 bis 7 im zweiten Speicherteil 3.

Im Ausführungsbeispiel von Fig. 1 sind die Speicherblöcke 4, 5, 6 dem zweiten Speicherteil 3 zugeordnet. Dadurch wird die größte Flexibilität der Schutzeinrichtung erreicht, weil eine Änderung der Zugangsberechtigung und des Passwortes über eine Neuprogrammierung (=update) möglich ist. Befinden sich das Schutzregister PCR oder die Register 5, 6 für das Passwort Key 1, Key 1 * jedoch im ersten Speicherteil 2, dann ist eine Neuprogrammierung über den Prozessor nicht möglich und die Zugangsberechtigung und das Passwort ist auf Dauer durch die vorhandene Programmierung festgelegt. Der Ausleseschutz gegenüber einem unberechtigten Zugang ibleibt gewahrt., denn die elektronische Sperrung der extern zugänglichen Datenschnittstellen erlaubt nicht, daß Daten auslesen werden.

Fig. 2 zeigt schematisch das Schutzregister PCR im ersten Speicherblock 4. Für jede externe Datenschnittstelle enthält das Schutzregister einen Speicherplatz zur Aufnahme eines "1"- oder "0"-Wertes. Dabei bedeutet der Inhalt "1", daß über die zugehörige Datenschnittstelle ein Lesen oder Schreiben der Speichereinrichtung 1 möglich ist. Diese Freigabe setzt selbstverständlich die vorgegebenen Zugangsmöglichkeiten nicht außer Kraft, beispielsweise daß der erste Speicherteil 2 nie über vom Prozessor steuerbare Datenschnittstellen zugänglich ist. Die Wahl von "1" hängt von der jeweiligen Technologie der Speichereinrichtung 1 ab. Bei Flash-Speichern befinden sich alle Zellen nach der Löschung im "1"-Zustand, somit muß für diesen Speichertyp der logische Zustand "1" als Freigabesignal gewählt werden. Entsprechend stellt "0" dann das Sperrsignal für den Lese-, Schreib- und Löschvorgang dar. Bei Betriebsbeginn setzt jede Stelle des Registerinhaltes beim Netzeinschalten einen entsprechenden "1"- oder "0"-Zustand in einer Zustandsmaschine (=state machine) des Prozessors. Oder das PCR-Register dient über feste Ausleseleitungen bereits als ein derartiges Zustandsregister. Der Inhalt eines derartigen Zustandsregisters darf während des Betriebes entweder nur durch eine Änderung des Schutzregisterinhaltes oder durch das Netzabschalten geändert werden. Eine Änderung des Zustandsregisterinhaltes im eingeschalteten Zustand ist in Abhängigkeit vom PCR-Register nur vom Zustand "1" auf den Zustand "0" möglich. Die Änderung in der anderen Richtung ist nicht möglich, weil das Sperrsignal "0" den Zugang zum Schutzregister PCR über die extern zugängliche Datenschnittstelle sperrt.

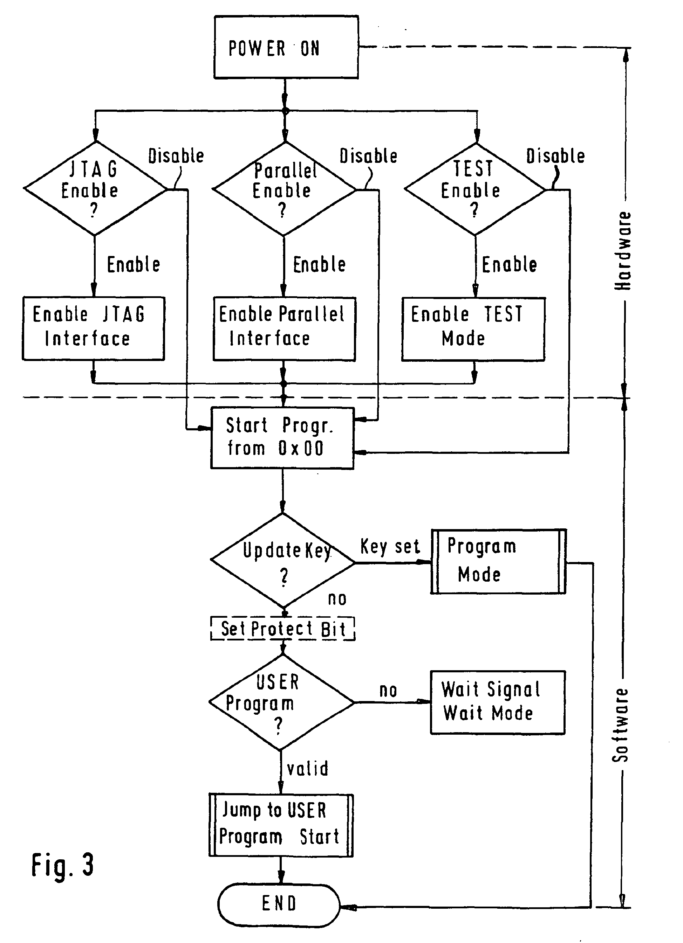

Fig. 3 zeigt im Flußdiagramm die ablaufenden Verfahrensschritte beim Einschalten der Versorgungsspannung. Das Einschalten der Versorgungsspannung (= power on) löst sofort eine Abfrage der einzelnen Speicherplätze im Schutzregister PCR aus. Bei dem angenommenen Beispiel eines mitintegrierten Flash-Speichers entspricht der logische Zustand "1" der Freigabe (= enable) und der Zustand "0" dem Sperren (= disable). In Fig. 3 zeigt hierzu als Beispiele drei extern zugänglichen Datenschnittstellen: eine JTAG-Schnittstelle, eine parallele Schnittstelle und eine TEST-Schnittstelle. Ist die entsprechende Schnittstelle freigegeben, was durch einen jeweiligen Funktionskasten symbolisiert ist, können über diese Schnittstelle Daten der Speichereinrichtung 1 ausgelesen oder geändert werden. Das Ende dieses Lesens oder Schreibens wird dadurch gebildet, daß der Sprung auf die Startadresse 0x00 im Boot-Bereich ausgelöst wird. Wird indessen nach dem Einschalten aus dem PCR-Register eine Sperrinformation ausgelesen, dann erfolgt sofort der Sprung auf die Boot-Startadresse 0x00 und ein Lesen oder Schreiben irgendwelcher Teile der Speichereinrichtung 1 über die Schnittstellen ist nicht möglich. Die Sperrinformation des PCR-Registers kann auf diese Weise nicht unterlaufen werden, weil diese hardwaregesteuerte Abfrage als erster Schritt sofort beim Einschalten der Versorgungsspannung während der ersten Systemtakte erfolgt. Der Start des Programms ab der Boot-Speicheradresse 0x00 stellt demgegenüber einen reinen Softwarebetrieb dar.

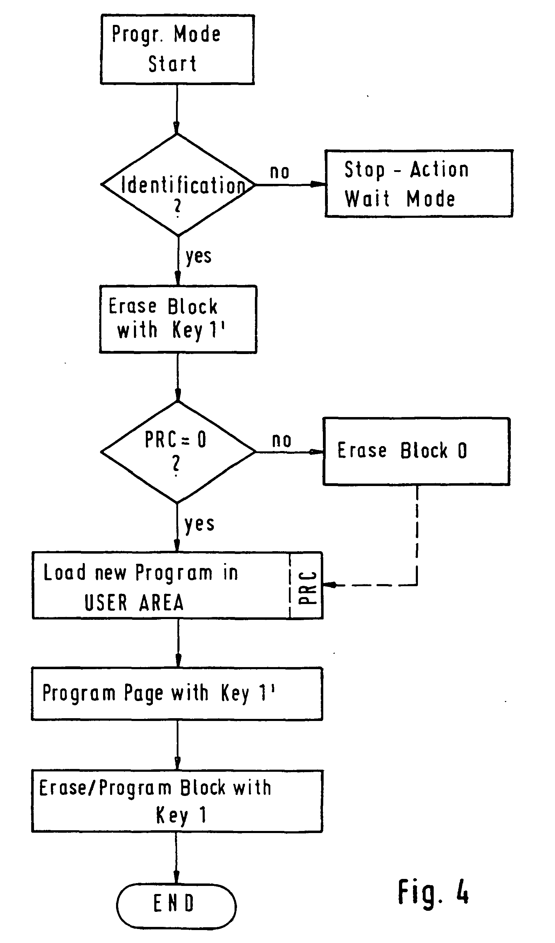

Der Programmstart von der Boot-Startadresse 0x00 löst als nächsten Schritt eine Abfrage aus, ob ein neues Anwendungsprogramm - z.B. ein "update" - geladen werden soll. Dieser Eingabewunsch kann beispielsweise durch manuelle Betätigung einer Eingabetaste (=Update Key) signalisiert werden. Wenn dies gewünscht wird (=Key set), wird ein Programmiermode ausgelöst, der im Flußdiagramm von Fig. 4 näher erläutert wird.

Wird keine Programmaktualisierung gewünscht, dann findet als weiterer Schritt eine Prüfung statt, ob sich überhaupt ein vollständiges und gültiges (=valid) Anwendungsprogramm (=USER Program) im zweiten Speicherteil 3 befindet. Ist das Prüfungsergebnis negativ, weil das Anwendungsprogramm nicht vollständig ist, wird ein Wartezustand ausgelöst und die laufenden Funktionen werden unterbrochen. Ist das Anwendungsprogramm jedoch vollständig und gültig, wird ein Sprung zur Programmstartadresse adr-U des Anwendungsprogrammes ausgelöst. Der erste Speicherteil 2 mit dem Initialisierungsprogramm (=Boot-Programm) wird damit verlassen. Der Prozessor 10 (vergl. Fig. 5) ist nun entsprechend dem vorhandenen Anwendungsprogramm bereit, den Inhalt der empfangenen Daten zu entschlüsseln, zu dekodieren und intern weiterzuverarbeiten. Wie bereits erwähnt, ist eine Weitergabe der entschlüsselten Daten über extern zugängliche Schnittstellen jedoch nicht möglich.

Eine weitere Sicherung gegen ein ungewolltes Löschen der gesamten Speichereinrichtung 1 ist durch Einfügen eines programmierbaren Schutzbits (=Set Protection Bit) im "nein"-Zweig nach der Eingabetaste-Abfrage (=Update Key) möglich. Zweckmäßigerweise erfolgt die Einfügung gleich hinter der Eingabetaste-Abfrage, weil sich dann das Anwendungsprogramm noch im Anfangsbereich befindet. Dieses Schutzbit kann bei der Programmierung des Anwendungsprogramms gesetzt werden und verhindert dann über Schaltungsmaßnahmen, daß durch irgend eine zufällige Störung in einem gerade ablaufenden Programm die Speichereinrichtung 1 ganz oder teilweise gelöscht wird. Dieses Schutzbit kann nur dadurch umgangen werden, daß das Gerät ausgeschaltet wird und mittels der Eingabetaste die Eingabe eines neuen Anwendungsprogrammes signalisiert wird. Ob dabei das Schutzbit gesetzt wird oder nicht, ist in das Belieben des Anwenders gestellt, der das neue Anwendungsprogramm erstellt und zur Verfügung stellt.

Fig. 4 zeigt im Flußdiagramm den Ablauf einer Neuprogrammierung (=update) des Anwendungsprogrammes, die durch den Programmiermode ausgelöst wird. Zunächst erfolgt eine Identifikationsprüfung. Wenn diese Prüfung negativ ist, dann wird der Programmiermode sofort unterbrochen und ein Wartezustand eingeleitet und angezeigt. War die Identifikationsprüfung erfolgreich, dann wird als nächster Schritt der zweite Schaltungsblock 4 mit dem Schlüsselwort "Key 1" gelöscht. Danach erfolgt eine Abfrage, ob das vorhandene Schutzrechtregister PCR eine Sperrinformation (= "0") enthält und ob der neue Inhalt auch eine Sperrinformation ist. Wenn beides nicht erfüllt ist, wird das PCR-Register gelöscht. Diese auf den ersten Blick etwas seltsame Abfrage hat folgenden Zweck. Zunächst werden nämlich die Fälle festgestellt, in denen der Inhalt des Schutzregisters PCR geändert werden muß oder der Freigabezustand erhalten bleiben soll. In diesen Fällen kann zunächst eine Löschung der PCR-Inhaltes erfolgen, bevor der Inhalt des neuen Programms geladen wird. Ergibt diese Prüfung jedoch, daß der bisherige Inhalt des Schutzregisters eine Sperrinformation war und das neu zu ladenden Programm ebenfalls eine Sperrinformation enthält, dann unterbleibt die Löschung des Schutzregisters PCR. Dadurch wird sicher gestellt, daß die im Schutzregister enthaltene Sperrinformation zu keinem Zeitpunkt während der Neuprogrammierung, also auch nicht kurzzeitig unterbrochen wird. Nach dem das Schutzregister PCR seinen neuen Inhalt hat, kann das weitere Anwendungsprogramm in den vierten Schaltungsblock 7 geladen werden. Dem Laden geht dabei zweckmäßigerweise eine Löschung des alten Anwendungsprogramms voraus.

Es wird darauf hingewiesen, daß während der ganzen Programmierung des Anwendungsprogramms das Passwort "Key 1*" im dritten Speicherblock 6 gelöscht war. Die Entschlüsselung des Programms erfolgte mittels des im zweiten Speicherblock 5 vorhandenen Passwortes "Key 1". Nachdem das neue Programm im vierten Speicherblock 7 geladen ist, wird das neue Passwort "Key 1*" vom empfangenen Programm in den dritten Speicherblock 6 geschrieben. Als letzter Schritt der Neuprogrammierung wird das alte Passwort "Key 1" im zweiten Speicherblock 5 gelöscht und durch das neue Passwort ersetzt. Damit ist die Neuprogrammierung abgeschlossen.

Aus dem Flußdiagramm geht hervor, daß die Neuprogrammierung mit der Löschung des Passwortes im dritten Speicherblock 6 beginnt und mit dem Löschen und Schreiben des neuen Passwortes im zweiten Speicherblock 5 endet. Der Zustand des dritten und zweiten Speicherblockes 6 bzw. 5 läßt somit eine Aussage zu, ob die Programmierung des Anwendungsprogrammes vollständig ist oder ob das Programm vor der Fertigstellung abgebrochen wurde. Liegt nämlich ein unvollständiges Anwendungsprogramm vor, dann zeigt ein einfacher Identitätsvergleich der Inhalte des zweiten und dritten Speicherblocks 5, 6, ob das Anwendungsprogramm vollständig und damit gültig ist. Ist das Anwendungsprogramm ungültig, dann verfällt der Prozessor entsprechend Fig. 3 in einen Wartemodus, der nur dadurch beendet werden kann, daß ein neues Programm von der Anwenderstartadresse adr-U aus gestartet wird.

In den Flußdiagrammen von Fig. 3 und Fig. 4 ist eine Globallöschung des gesamten Inhaltes der Speichereinrichtung 1 nicht dargestellt. Sie ist beispielsweise durch eine vorgegebene Konfiguration von Pegeln an vorgegebenen Anschlüssen des Prozessors 10 auslösbar. Dieser Zustand darf auch im ungünstigsten Betriebsfall des Prozessors nie auftreten. Zweckmäßigerweise ist er daher die Globallöschung an einen völlig irregulären Betriebszustand geknüpft. Die Globallöschung hat den Sinn, unter bestimmten Bedingungen die Sperrung durch das Schutzregister PCR aufzuheben, ohne daß dabei irgendwelche geschützte Daten aus der Speichereinrichtung ausgelesen werden können. Denn durch die Löschung sind diese Daten verschwunden. Eine Neuprogrammierung der gesamte Speichereinrichtung 1 ist nun möglich. Die Programmierung ist etwas beschwerlich, weil der erste Speicherteil nach wie vor nicht über vom Prozessor gesteuerte Datenschnittstellen geladen werden kann, sondern nur über die vom Prozessor unabhängigen Schnittstellen. Durch die Globallöschung ist es dem Hersteller oder Anwender möglich, versehentlich mit einem fehlerhaften oder gar falschen Programm geladene Prozessoren nach ihrer Sperrung doch noch zu verwenden. Eine Information über die Speicherinhalte ist Ditten, sofern sie Kenntnis über die Globallöschung haben, nicht möglich. Die Schutzfunktion bleibt also voll gewahrt.

Fig. 5 zeigt schematisch als Blockschaltbild ein Ausführungsbeispiel der Erfindung mit den für die Schutzfunktion wichtigen Funktionseinheiten. Ein Prozessor 10 enthält einen Prozessorkern 11, dessen Ein- und Ausgänge mit einem internen Datenbus 12 und einem internen Adreßbus 13 verbunden sind. Da diese beiden Busse 12, 13 nicht nach außen geführt sind, können sie auch als schnelle Parallelbusse mit beispielsweise je 32 Leitungen ausgeführt sein. Eventuell gibt es daneben intern auch weniger effektive Busverbindungen, die einzelnen Funktionseinheiten des Prozessors miteinander verbinden. Die Taktung des gesamten Prozessors 10 erfolgt mit einem Systemtakt cl, der in einem mitintegrierten Taktgenerator 14 erzeugt wird.

Die im Prozessorkern 11 zu verarbeitenden Daten und Adressen kommen entweder über einen Datenbus 12 oder einen Adreßbus 13 aus einem statischen Schreib-Lese-Speicher (= SRAM), einem Flash-Speicher 1 oder einer Datenschnittstelle 16, 17, 18. Es ist auch möglich, daß die Daten und Adressen direkt von einer Datenschnittstelle 16 dem Prozessorkern zugeführt sind. Mit dem Daten- und Adreßbus 12 bzw. 13 sind im Ausführungsbeispiel von Fig. 5 folgende extern zugänglichen Datenschnittstellen verbunden: ein JTAG-Interface 16, ein USB-Interface 17 und ein Parallel-Interface 18. Die USB-Datenschnittstelle 17 arbeitet mit dem Prozessorkern 11 über eine entsprechende Programmsteuerung zusammen. Die vom Prozessorkern 11 unabhängigen Schnittstellen JTAG 16 und die Parallelschnittstelle 18 verfügen über mehr oder weniger komfortable Daten- und Adreßeingänge.

Zur Bildung von Speicherbereichsignalen adr-i werden aus den Einzeladressen Speicherbereichsignale adr-i mittels eines Adressengenerators 19 gebildet. Diese Adressenbereichssignale werden für jede Datenschnittstelle 16, 17, 18 in einer zugehörigen Verknüpfungseinrichtung 20, 21, 22 mit dem zugehörigen Sperr- oder Freigabesignal aus dem PCR-Register verknüpft und bilden ein zugehöriges Steuersignal 25, 26, 27 das die jeweilige Schnittstelle 16, 17, 18 sperrt oder freigibt.

## Patentansprüche

1. Speichereinrichtung (1) für einen Prozessor (10), die zusammen mit diesem monolithisch integriert ist und einen ersten Speicherteil (2) und einen zweiten Speicherteil (3) enthält,
- der erste Speicherteil (2) ist über eine erste Gruppe von Datenschnittstellen (16, 18) und der zweite Speicherteil (3) über eine zweite Gruppe von Datenschnittstellen (16, 17, 18) schreib und/oder lesbar,
- der erste und/oder zweite Speicherteil (2 bzw. 3) enthalten blockweise adressierbare Speicherblöcke (4, 5, 6, 7),
- ein erster Speicherblock (4) enthält ein Schutzregister (PCR) mit programmierbaren Freigabe- und/oder Sperrinformationen für die erste und zweite Gruppe von Datenschnittstellen (16, 18; 16, 17, 18),
- die Abfrage des Schutzregisters (PCR) erfolgt, bevor das Initialisierungsprogramm Abfragen oder Programmierungen zulässt,
wobei die erste Gruppe von Datenschnittstellen vom Prozessor (10) unabhängige Datenschnittstellen (16, 18) umfasst.

2. Speichereinrichtung nach Anspruch 1,
**dadurch gekennzeichnet, dass** die zweite Gruppe von Datenschnittstellen sowohl die vom Prozessor (10) unabhängigen Datenschnittstellen (16, 18) als auch vom Prozessor (10) gesteuerten Datenschnittstellen (17) umfasst.

3. Speichereinrichtung (1) nach einem der Ansprüche 1 oder 2,
**dadurch gekennzeichnet, dass** ein zweiter und ein dritter Speicherblock (5 bzw. 6) der Speicherung eines Passwortes (Key 1, Key 1*) dienen, das mit einem Ent- und/oder Verschlüsselungsprogramm im ersten und/oder zweiten Speicherteil (2 bzw. 3) verkoppelt ist.

4. Speichereinrichtung (1) nach Anspruch 3,
**dadurch gekennzeichnet, dass** nur für einen autorisierten Zugang, der mittels des Passwortes (Key 1, Key 1') und des im ersten und/oder zweiten Speicherteil (2 bzw. 3) enthaltenen Initialisierungs-, Ent-und/oder Verschlüsselungsprogramms identifiziert ist, ein Schreiben und/oder Lesen des zweiten Speicherteils (3), z.B. im Rahmen einer Programmaktualisierung, über die zweite Gruppe von Datenschnittstellen (16, 17, 18) möglich ist, sofern keine zugehörigen Sperrinformationen im Schutzregister (PCR) gesetzt sind.

5. Speichereinrichtung (1) nach Anspruch 4,
**dadurch gekennzeichnet, dass** das Schreiben und/oder Lesen des ersten Speicherteils (2) bei einer im Schutzregister (PCR) gesetzten Sperrinformation auch bei einem autorisierten Zugang über die erste Gruppe von Datenschnittstellen (16, 18) nicht möglich ist.

6. Speichereinrichtung (1) nach einem der Ansprüche 1 bis 5,
**dadurch gekennzeichnet, dass** bei einem Programm- oder Versorgungsspannungsabbruch, bei dem mindestens ein Teil des im zweiten Speicherteils (3) vorhandenen Anwendungsprogramms geändert oder gelöscht ist, der Prozessor (10) in einen Wartezustand übergeht.

7. Speichereinrichtung (1) nach Anspruch 6,
**dadurch gekennzeichnet, dass** der Wartezustand durch eine Startinformation beendet wird, die eine von einer Startadresse (adr-U) ausgehende Neuprogrammierung des Anwendungsprogramms (USER-Programm) auslöst.

8. Speichereinrichtung (1) nach einem der Ansprüche 1 bis 7,
**dadurch gekennzeichnet, dass** mittels einer Globallöschinformation der erste und zweite Speicherbereich (2, 3) löschbar sind.

9. Speichereinrichtung (1) nach Anspruch 8,
**dadurch gekennzeichnet, dass** die Globallöschinformation mittels einer vorgegebenen Konfiguration von Pegeln an vorgegebenen Anschlüssen des Prozessors (10) auslösbar ist.

10. Speichereinrichtung (1) nach Anspruch 9,
**dadurch gekennzeichnet, dass** die vorgegebenen Anschlüsse im eingebauten Betriebszustand des Prozessors (10), insbesondere über ein Einbauplatine, nicht zugänglich sind.

11. Speichereinrichtung (1) nach einem der Ansprüche 1 bis 10,
**dadurch gekennzeichnet, dass** bei einer Programmaktualisierung die im Schutzregister (PCR) bereits vorhandenen Sperrinformationen zu keinem Zeitintervall gelöscht werden, sondern unverändert im Schutzregister verbleiben, wenn das neue Programm ebenfalls für die jeweilige Datenschnittstelle (16, 17, 18) eine Sperrinformation aufweist.

12. Speichereinrichtung (1) nach einem der Ansprüche 1 bis 11,
**dadurch gekennzeichnet, dass** die von der Abfrage des Schutzregisters im Initialisierungsprogramm ausgelöste Sperrungen der zugehörigen Datenschnittstellen (16, 17, 18) über interne Steuersignale (25, 26, 27) erfolgen, die weder direkt noch indirekt noch durch ein Programm aufhebbar sind.

13. Speichereinrichtung (1) nach einem der Ansprüche 1 bis 12,
**dadurch gekennzeichnet, dass** ein programmierbares Schutzbit (Set-Protection-Bit) in das Anwendungsprogramm eingefügt ist, das über Schaltungsmaßnahmen ein zufälliges Löschen der Speichereinrichtung (1) verhindert.

## Claims

1. A memory device (1) for a processor (10), which is monolithically integrated together with the latter and includes a first memory part (2) and a second memory part (3),
- the first memory part (2) is writeable and/or readable via a first group of data interfaces (16, 18) and the second memory part (3) is writeable and/or readable via a second group of data interfaces (16, 17, 18),
- the first and/or second memory part (2 and 3, respectively) includes memory blocks (4, 5, 6, 7) which are addressable in blocks,
- a first memory block (4) includes a protection register (PCR) with programmable enabling and/or blocking information for the first and second groups of data interfaces (16, 18; 16, 17, 18),
- inquiring the protection register (PCR) is carried out before the initialization program allows any inquiries or programming actions,
with the first group of data interfaces comprising data interfaces (16, 18) which are independent of the processor (10).

2. The memory device (1) according to claim 1, **characterized in that** the second group of data interfaces comprises both the data interfaces (16, 18) which are independent of the processor (10) and data interfaces (17) which are controlled by the processor (10).

3. The memory device (1) according to any of the claims 1 or 2,
**characterized in that** a second and a third memory block (5 and 6, respectively) serve for storing a password (Key 1, Key 1*) which is coupled with a decrypting and/or encrypting program in the first and/or second memory part (2 and 3, respectively).

4. The memory device (1) according to claim 3,
**characterized in that** writhing in and/or reading of the second memory part (3), e.g. in the context of a program update, is possible via the second group of data interfaces (16, 17, 18) only for an authorized access identified by means of the password (Key 1, Key 1*) and the initialization, decrypting and/or encrypting program contained in the first and/or second memory part (2 and 3, respectively) provided that no related blocking information is set in the protection register (PCR).

5. The memory device (1) according to claim 4,
**characterized in that** writing in and/or reading of the first memory part (2) is not possible via the first group of data interfaces (16, 18) even for an authorized access in case the protection register (PCR) holds any blocking information.

6. The memory device (1) according to any of the claims 1 to 5,
**characterized in that** the processor (10) enters a standby condition in case of a program termination or a supply voltage interruption in which at least a part of the application program present in the second memory part (3) is altered or deleted.

7. The memory device (1) according to claim 6,
**characterized in that** the standby condition is terminated by a starting information initiating the reprogramming of the application program (USER program) starting from a starting address (adr-U).

8. The memory device (1) according to any of the claims 1 to 7,
**characterized in that** the first and second memory regions (2, 3) can be deleted by means of a global erasing information.

9. The memory device (1) according to claim 8,
**characterized in that** the global erasing information can be initiated by means of a predefined configuration of levels on predefined pins of the processor (10).

10. The memory device (1) according to claim 9,
**characterized in that** the predefined pins in the installed operational state of the processor (10), in particular via a mounting board, are not accessible.

11. The memory device (1) according to any of the claims 1 to 10,
**characterized in that** the blocking information already present in the protection register (PCR) is not deleted in any time interval in case of a program update, but remains unchanged in the protection register if the new program likewise comprises blocking information for the respective data interface (16, 17, 18).

12. The memory device (1) according to any of the claims 1 to 11,
**characterized in that** the actions of blocking the related data interfaces (16, 17, 18) initiated by inquiring the protection register in the initialization program are performed via internal control signals (25, 26, 27) which can neither be canceled in a direct nor indirect manner nor by a program.

13. The memory device (1) according to any of the claims 1 to 12,
**characterized in that** a programmable protection bit (Set-Protection-Bit) is inserted in the application program which, by way of circuitry measures, prevents the memory device (1) from being deleted by accident.

## Revendications

1. Dispositif de mémoire (1) pour un processeur (10), qui est intégré de manière monolithique à celui-ci et contient une première partie de mémoire (2) et une deuxième partie de mémoire (3),
- la première partie de mémoire (2) est inscriptible et/ou lisible via un premier groupe d'interfaces de données (16, 18) et la deuxième partie de mémoire (3) via un deuxième groupe d'interfaces de données (16, 17, 18),
- la première et/ou la deuxième partie de mémoire (2 et/ou 3) contiennent des blocs de mémoire adressables par bloc (4, 5, 6, 7),
- un premier bloc de mémoire (4) contient un registre de protection (PCR) comportant des informations d'autorisation et/ou de blocage programmables pour le premier et le deuxième groupe d'interfaces de données (16, 18 ; 16, 17, 18),
- la consultation du registre de protection (PCR) se fait avant que le programme d'initialisation autorise des consultations ou des programmations,
le premier groupe d'interfaces de données comprenant des interfaces de données (16, 18) indépendantes du processeur (10).

2. Dispositif de mémoire selon la revendication 1,
**caractérisé en ce que** le deuxième groupe d'interfaces de données comprend aussi bien les interfaces de données (16, 18) indépendantes du processeur (10) que des interfaces de données (17) commandées par le processeur (10).

3. Dispositif de mémoire (1) selon l'une des revendications 1 ou 2,
**caractérisé en ce qu'**un deuxième et un troisième bloc de mémoire (5 et/ou 6) servent à mémoriser un mot de passe (Key 1, Key 1*) qui est couplé à un programme de codage et/ou de décodage dans la première et/ou la deuxième partie de mémoire (2 et/ou 3).

4. Dispositif de mémoire (1) selon la revendication 3,
**caractérisé en ce qu'**une écriture et/ou lecture de la deuxième partie de mémoire (3), par exemple dans le cadre d'une actualisation de programme, via le deuxième groupe d'interfaces de données (16, 17, 18) n'est possible que pour un accès autorisé qui est identifié au moyen du mot de passe (Key 1, Key 1') et du programme d'initialisation, de décodage et/ou de codage contenu dans la première et/ou la deuxième partie de mémoire (2 et/ou 3), pour autant qu'aucune information de blocage afférente ne soit activée dans le registre de protection (PCR).

5. Dispositif de mémoire (1) selon la revendication 4,
**caractérisé en ce que** l'écriture et/ou la lecture de la première partie de mémoire (2) n'est pas possible en cas d'information de blocage activée dans le registre de protection (PCR), même en cas d'accès autorisé via le premier groupe d'interfaces de données (16, 18).

6. Dispositif de mémoire (1) selon l'une des revendications 1 à 5,
**caractérisé en ce que**, en cas d'interruption de programme ou de tension d'alimentation lors de laquelle au moins une partie du programme d'application figurant dans la deuxième partie de mémoire (3) est modifiée ou effacée, le processeur (10) passe dans un état d'attente.

7. Dispositif de mémoire (1) selon la revendication 6,
**caractérisé en ce que** l'état d'attente est terminé par une information de démarrage qui déclenche une reprogrammation du programme d'application (USER-Programm) partant d'une adresse de démarrage (adr-U).

8. Dispositif de mémoire (1) selon l'une des revendications 1 à 7,
**caractérisé en ce que** la première et la deuxième zone de mémoire (2, 3) sont effaçables au moyen d'une information d'effacement globale.

9. Dispositif de mémoire (1) selon la revendication 8,
**caractérisé en ce que** l'information d'effacement globale est déclenchable au moyen d'une configuration prédéterminée de niveaux sur des connecteurs prédéterminés du processeur (10).

10. Dispositif de mémoire (1) selon la revendication 9,
**caractérisé en ce que** les connecteurs prédéterminés ne sont pas accessibles dans l'état de service intégré du processeur (10), en particulier via une platine intégrée.

11. Dispositif de mémoire (1) selon l'une des revendications 1 à 10,
**caractérisé en ce que**, en cas d'actualisation de programme, les informations de blocage figurant déjà dans le registre de protection (PCR) ne sont effacées à aucun intervalle de temps, mais demeurent inchangées dans le registre de protection si le nouveau programme présente également une information de blocage pour l'interface de données (16, 17, 18) respective.

12. Dispositif de mémoire (1) selon l'une des revendications 1 à 11,
**caractérisé en ce que** les blocages des interfaces de données afférents (16, 17, 18) déclenchés par la consultation du registre de protection dans le programme d'initialisation se font via des signaux de commande internes (25, 26, 27) qui ne peuvent être annulés ni directement, ni indirectement, ni par un programme.

13. Dispositif de mémoire (1) selon l'une des revendications 1 à 12,
**caractérisé en ce qu'**un bit de protection programmable (Set-Protection-Bit) est inséré dans le programme d'application, qui empêche un effacement fortuit du dispositif de mémoire (1) via des mesures de commutation.
